(19) **Europäisches Patentamt**
**European Patent Office**
**Office européen des brevets**

(11) **EP 4 272 864 A1**

(12) **EUROPEAN PATENT APPLICATION**
published in accordance with Art. 153(4) EPC

(43) Date of publication:
**08.11.2023 Bulletin 2023/45**

(21) Application number: **21915209.7**

(22) Date of filing: **23.12.2021**

(51) International Patent Classification (IPC):
**B01J 23/63** (2006.01)    **H01M 4/86** (2006.01)
**H01M 4/92** (2006.01)    **H01M 8/10** (2016.01)
**C25B 11/04** (2021.01)    **C25B 11/073** (2021.01)

(52) Cooperative Patent Classification (CPC):
**B01J 23/63; H01M 4/86; H01M 4/92; H01M 8/10;**
C25B 11/04; C25B 11/073

(86) International application number:
**PCT/JP2021/047977**

(87) International publication number:
**WO 2022/145349 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.01.2021 JP 2021000222**

(71) Applicants:
• **University of Yamanashi**
 **Kofu-shi, Yamanashi 400-8510 (JP)**
• **NIHON KAGAKU SANGYO CO.,LTD.**
 **Tokyo 110-0015 (JP)**

(72) Inventors:
• **KAKINUMA, Katsuyoshi**
 **Kofu-shi, Yamanashi 400-8510 (JP)**
• **IIYAMA, Akihiro**
 **Kofu-shi, Yamanashi 400-8510 (JP)**
• **UCHIDA, Makoto**
 **Kofu-shi, Yamanashi 400-8510 (JP)**
• **WATANABE, Sumitaka**
 **Soka-shi, Saitama 340-0005 (JP)**
• **AMEMIYA, Isao**
 **Soka-shi, Saitama 340-0005 (JP)**

(74) Representative: **Gulde & Partner**
**Patent- und Rechtsanwaltskanzlei mbB**
**Wallstraße 58/59**
**10179 Berlin (DE)**

(54) **SUPPORTED METAL CATALYST**

(57)    The present invention provides a supported metal catalyst that has an electric conductivity acceptable as a catalyst and can suppress the generation of hydrogen peroxide.

According to the present invention, provided is a supported metal catalyst, comprising: a support powder; and metal fine particles supported on the support powder, wherein: the support powder is an aggregate of support fine particles; the support fine particles have a chained portion structured by a plurality of crystallites being fusion-bonded to form a chain; the support fine particles are structured with a metal oxide; the metal oxide contains cerium; and an electric conductivity of the supported metal catalyst is $10^{-4}$ S/cm or higher.

Fig. 1

## Description

### Technical Field

The present invention relates to a supported metal catalyst.

### Background Art

Patent Literature 1 discloses an electrode catalyst obtained by supporting platinum on Nb-SnO$_2$ produced by a flame method, and a polymer electrolyte fuel cell using the same.

### Citation List

### Patent Literature

[Patent Literature 1] WO2015/050046

### Summary of Invention

### Technical Problem

In a polymer electrolyte fuel cell as disclosed in Patent Literature 1, hydrogen peroxide is generated by the reduction of oxygen during power generation, and the generated hydrogen peroxide may cause degradation of the electrolyte membrane. For this reason, a technology to suppress the generation of hydrogen peroxide has been desired.
The present invention has been made by taking these circumstances into consideration. The present invention provides a supported metal catalyst that has an electric conductivity acceptable as a catalyst and can suppress the generation of hydrogen peroxide.

### Solution to Problem

According to the present invention, provided is a supported metal catalyst, comprising: a support powder; and metal fine particles supported on the support powder, wherein: the support powder is an aggregate of support fine particles; the support fine particles have a chained portion structured by a plurality of crystallites being fusion-bonded to form a chain; the support fine particles are structured with a metal oxide; the metal oxide contains cerium; and an electric conductivity of the supported metal catalyst is 10$^{-4}$ S/cm or higher.
The present inventors have conducted intensive research, and have found that when the metal oxide structuring the support fine particles contains cerium, the generation of hydrogen peroxide is suppressed. Cerium oxide is not usually selected as a material structuring the support fine particles due to its extremely low electric conductivity. In the present invention, however, the electric conductivity of the supported metal catalyst is increased to 10$^{-4}$ S/cm or higher, which is a value acceptable as a catalyst, by increasing the supported amount of the metal fine particles. This allows to obtain the supported metal catalyst that has an electric conductivity acceptable as a catalyst and can suppress the generation of hydrogen peroxide, thereby leading to completion of the present invention.

### Brief Description of Drawings

Fig. 1 shows a model diagram of a catalyst structure of a supported metal catalyst 100.
Fig. 2 shows a view in which support fine particles 150 are taken from Fig. 1.
Fig. 3 shows a condition of a branch 160 of the support fine particles 150 of Fig. 1.
Fig. 4 shows a gas diffusion route in Fig. 1.
Fig. 5 shows a sectional view which is cut through a center of a burner 2 of a manufacturing apparatus 1 for manufacturing a support powder.
Fig. 6 shows an enlarged view of a region X in Fig. 5.
Fig. 7 shows a sectional view taken along a line A-A of Fig. 5.
Fig. 8 shows an enlarged view of a region Y in Fig. 7.
Fig. 9 shows a TEM image of the supported metal catalyst 100 of Example 1.
Fig. 10 shows a configuration of an apparatus for measuring a mass activity in an oxygen reduction reaction.

Fig. 11 is a graph showing the measurement result of a mass activity in an oxygen reduction reaction.
Fig. 12 shows a configuration of an apparatus for measuring a generation amount of hydrogen peroxide.
Fig. 13A is a graph showing measurements of the generation amount of hydrogen peroxide for Example 4 and Comparative Example 1.
Fig. 13B is a graph showing measurements of the generation amount of hydrogen peroxide for Example 3, Example 5, Example 6, and Comparative Example 2.
Fig. 14 is a graph showing the measurement result of a current-voltage characteristic.
Fig. 15 is a graph showing changes in open circuit voltages with time.
Fig. 16 is a schematic diagram showing a state in which $Ce^{3+}$ is being induced in the vicinity of metal fine particles 130.
Figs. 17A and 17B show the result of performing STM-EELS measurement for the supported metal catalyst 100 of Example 1. Fig. 17A is a TEM image showing the measurement region, and Fig. 17B is a graph showing the measurement result.
Figs. 18A to 18C show the result of performing STEM-EDX measurement for the supported metal catalyst 100 of Example 1.

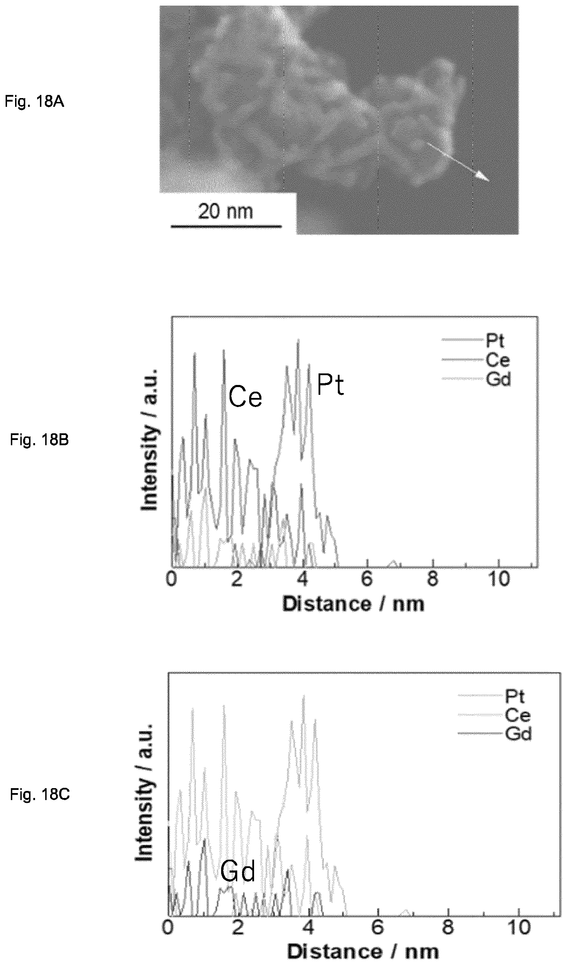

Fig. 18A is a TEM image showing the measurement region, and Figs. 18B and 18C are graphs showing the measurement result.

**Description of Embodiments**

Hereinafter, embodiments of the present invention will be explained with reference to the drawings. Various distinctive features shown in the following embodiments can be combined with each other. In addition, an invention can be established independently for each of the distinctive features.

1. Supported Metal Catalyst 100

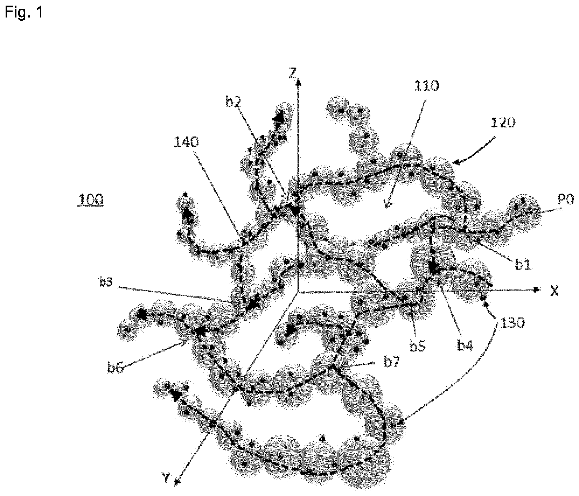

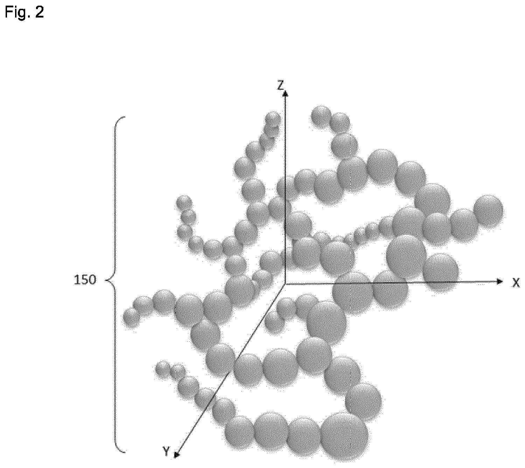

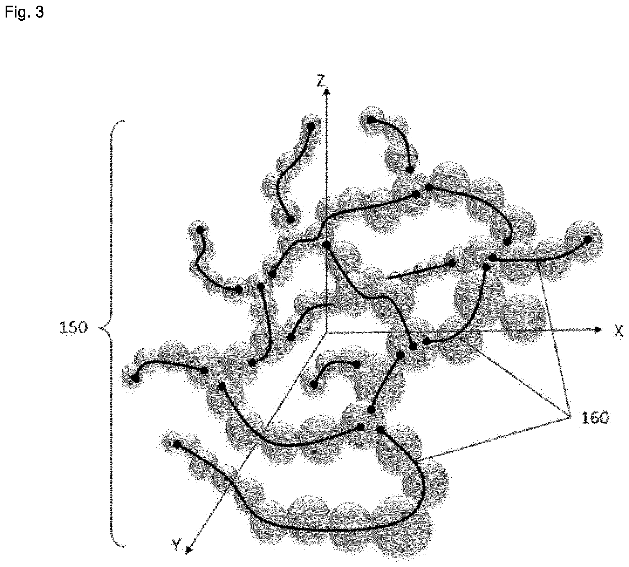

As shown in Figs. 1 to 4, the supported metal catalyst 100 comprises a support powder which is an aggregate of support fine particles 150 having a chained portion structured by fusion-bonding a plurality of crystallites 120 into a chain, and metal fine particles 130 supported on the support powder. Hereinafter, each constitution will be explained.

1-1. Support Fine Particles 150 and Support Powder

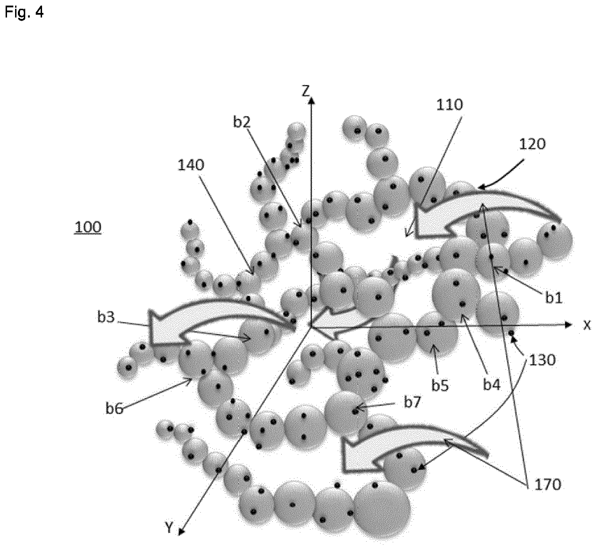

As shown in Figs. 1 to 3, in the support fine particles 150, a three-dimensional void 110 surrounded by a branch 160 and pores existing between a plurality of branches is formed. Here, a plurality of crystallites 120 structuring the support fine particles 150 is fusion-bonded to form a chained portion, thereby forming the branch 160. A gas diffusion route to diffuse and transfer oxygen as an oxidant and/or hydrogen as a fuel to the supported metal catalyst 100 is formed by the three-dimensional arrangement of the support fine particles 150 described above.
As shown in Figs. 1 to 3 as an example of structure model of the supported metal catalyst, the support fine particles 150 comprise four pores of a first pore surrounded by points b1, b2, b5, b4, and b1, where the branches link with each other (may be referred to as branching points, or merely as branch); a second pore surrounded by branching points b1, b2, b3, and b1; a third pore surrounded by branching points b2, b3, b6, b7, b5, and b2; and a fourth pore surrounded by branching points b1, b3, b6, b7, b5, b4, and b1. Here, when a plane surrounded by the branching points of each of the pores (first to fourth pores) is taken as the pore plane, the void 110 is a three-dimensional space surrounded by the four pore planes. The support fine particles 150 comprise a plurality of pores surrounded by a plurality of branching points in which a plurality of branches link with each other. Further, the three-dimensional spaces (voids) which are surrounded by the plurality of pores are provided sequentially, thereby structuring the support fine particles. Accordingly, the void serves as the gas diffusion route (gas diffusion pathway) of oxygen, hydrogen and the like. Fig. 4 shows the gas diffusion route in Fig. 1. In Fig. 4, one example of the gas diffusion route (gas diffusion pathway) of void 110 is shown. A flow (gas diffusion route) 170 of an oxidant (gas), a fuel gas and the like can flow in the desired direction via the void 110 as shown in Fig. 4. That is, the void 110 serves as the gas diffusion route.
Here, as a simple structure of the support fine particles 150, the support fine particles can have only one pore (for example, the first pore surrounded by the branching points b1, b2, b5, b4, and b1). In such case, a void 110 having a thickness of the crystallite grain of the crystallite 120 is provided. As a simpler structure, the support fine particles 150 can have one or more branches. In such case, the branches within the support fine particles 150 prohibits cohesion of the support fine particles, thereby providing the void 110 between the support fine particles.
Here, the "pore" mentioned above can also be mentioned as closed curve (closed loop). Otherwise, it can be said that a void 110 surrounded by a closed plane including the aforementioned plurality of branching points (for example, branching points b1 to b7) is provided. As the branching points b1 to b7, the center of gravity of the crystallite of the metal oxide structuring the support fine particles 150 in which the branches connect with each other can be taken as the branching point, or an arbitrary point in the crystallite can be taken as the branching point.

The size of the crystallite 120 is preferably 10 to 30 nm, more preferably 10 to 15 nm. The size is, particularly for example, 10, 11, 12, 13, 14, 15, 16, 17, 18, 19, 20, 25, or 30 nm, and may be in the range between the two values exemplified herein. The size of the crystallite 120 (crystallite diameter) can be obtained in accordance with Sheller formula using half-width in the XRD pattern peak. If the crystallite 120 is too small, the oxide may be easily eluted and durability of the catalyst may decrease. If the crystallite 120 is too large, a secondary pore volume may be small and a flooding phenomenon may occur more easily.

The aggregate of the support fine particles 150 is in the form of a powder. Such aggregate is referred to as "support powder".

The mean particle size of the support fine particles 150 in the support powder is preferably 0.1 um to 4 $\mu$m, and more preferably 0.5 um to 2 um. The mean particle size of the support fine particles 150 can be measured with a laser diffraction/scattering particle size distribution analyzer.

The BET specific surface area of the support powder is preferably 12 $m^2$/g or larger, and is more preferably 25 $m^2$/g or larger. The BET specific surface area is, for example, 12 to 100 $m^2$/g, particularly for example, 12, 15, 20, 25, 30, 35, 40, 45, 50, or 100 $m^2$/g, and may be in the range between the two values exemplified herein.

The support powder preferably has a void fraction of 50% or higher, more preferably 60% or higher. The void fraction is, for example, 50 to 80%, particularly for example, 50, 55, 60, 65, 70, 75, or 80%, and may be in the range between the two values exemplified herein. The void fraction can be obtained by mercury press-in method or FIB-SEM.

The support powder preferably has a repose angle of 50 degrees or less, and more preferably a repose angle of 45 degrees or less. In such case, the support powder has a similar flowability as flour, and thus handling is simple. The repose angle is, for example, 20 to 50 degrees, particularly for example, 20, 25, 30, 35, 40, 45, or 50, and may be in the range between the two values exemplified herein. The repose angle can be obtained by a drop volume method.

The support fine particles 150 are structured with a metal oxide. The metal oxide contains cerium. Since cerium oxide has a property to suppress the generation of hydrogen peroxide, the metal oxide containing cerium suppresses the generation of hydrogen peroxide during power generation of a fuel cell. It is thought that cerium oxide suppresses the generation of hydrogen peroxide by trapping OH radicals generated by the reduction of $O_2$ using oxygen defects on the surface.

The atomic ratio of cerium to whole metal contained in the metal oxide is preferably 0.3 to 1. This is because the effect of suppressing the generation of hydrogen peroxide is prominent in this case. The atomic ratio is, specifically for example, 0.30, 0.35, 0.40, 0.45, 0.50, 0.55, 0.60, 0.65, 0.70, 0.75, 0.80, 0.85, 0.90, 0.95, or 1.00, and may be in the range between the two values exemplified herein.

The metal oxide may contain another element other than cerium. As the another element, at least one of rare earth elements represented by gadolinium and yttrium, group 5 elements represented by niobium and tantalum, group 6 elements represented by tungsten, and group 15 elements represented by antimony is exemplified. Oxygen defects can be generated by adding a rare earth element (trivalent) to promote the trapping and decomposition of the hydrogen peroxide decomposition intermediate (OH) and the like. By adding a group 5 element represented by Nb, Ta and the like, or a group 6 element represented by tungsten (pentavalent or more element), an electric conductivity (promotion of electron supply) can be induced to promote the reduction reaction of hydrogen peroxide.

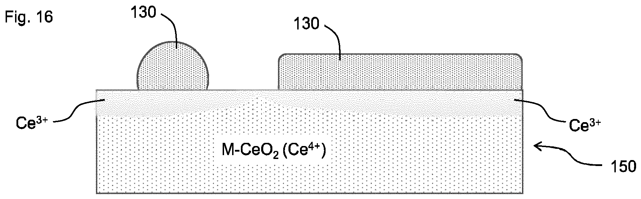

It is thought that as shown in Fig. 16, the supported metal catalyst 100 induces $Ce^{3+}$ with high conductivity by the reducing action of the metal fine particles 130 in the vicinity of the area where the metal fine particles 130 are supported, thereby exhibiting high electric conductivity. In this perspective, the another element is preferably a rare earth element or a trivalent metal of the element other than the rare earth element. In this case, $Ce^{3+}$ is easily induced by the principle of electroneutrality.

From another perspective, if the ionic radius of the tetravalent cation of cerium ($Ce^{4+}$) is taken as R1 and the ionic radius of the cation with the same valence as the number of valence electrons of the another element ($M^{n+}$ for n-valent metal M and $Zr^{4+}$ for tetravalent Zr) is taken as R2, an element for which R2/R1 is 0.99 or less is preferably used as the another element. Since $Ce^{3+}$ has a larger ionic radius than $Ce^{4+}$, $Ce^{3+}$ is likely to be formed to relax the lattice strain caused by the addition of an element with a smaller ionic radius than $Ce^{4+}$. Examples of such an element include zirconium (ionic radius: 0.84 Å), hafnium (ionic radius: 0.83 Å), and titanium (ionic radius: 0.74 Å). Since the ionic radius of $Ce^{4+}$ is 0.97 Å and the ionic radius of $Zr^{4+}$ is 0.84 Å, R2/R1 = 0.87 when the another element is Zr.

R2/R1 is, for example, 0.70 to 0.99, specifically for example, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, or 0.99, and may be in the range between the two values exemplified herein, or may be equal to or less than any one of the values exemplified herein.

Since the electric conductivity of cerium oxide is very low, the electric conductivity of the support powder becomes also low when the metal oxide structuring the support fine particles 150 contains cerium. The electric conductivity of the support powder is, for example, $10^3$ S/cm or lower, and preferably $10^{-15}$ to $10^3$ S/cm. The electric conductivity is, specifically for example, $10^{\alpha}$ S/cm ($\alpha$ is, specifically for example, -15, -10, -9, -8, -7, -6, -5, -4, -3, -2, -1, 0, 1, 2, or 3), and may be in the range between the two values exemplified herein, or may be equal to or lower than any one of the values exemplified herein. The electric conductivity can be measured in accordance with the JIS standard (JIS K 7194).

1-2. Metal Fine Particles 130

The metal fine particles 130 are fine particles of metal which can serve as a catalyst. Preferably, the metal fine particles 130 are constituted of platinum only or an alloy of platinum and other metals (e.g., transition metals). The transition metal is preferably cobalt (Co) or nickel (Ni), and cobalt is particularly preferred. The metal (cerium or another element) of the metal oxide structuring the support fine particles may diffuse into the metal fine particles 130. Even in this case, the metal fine particles 130 can exhibit a catalytic function. Therefore, the metal fine particles 130 may contain cerium or another element.

A ratio of platinum contained in the metal fine particles 130 is preferably 80 atomic% or higher. Since metals other than platinum easily elute during operation, the durability of the catalyst is enhanced as the ratio of the platinum becomes higher. The ratio is, particularly for example, 80, 85, 90, 95, or 100 atomic%, and may be in the range between the two values exemplified herein.

The metal fine particles 130 have a crystallite diameter of 2 to 10 nm, which is determined from XRD pattern. When the crystallite diameter is too small, the metal particles 130 easily dissolve as an electrode reaction proceeds. If the crystallite diameter is too large, an electrochemically active surface area becomes small, and thus a desired electrode performance cannot be achieved. The crystallite diameter is, particularly for example, 2, 3, 4, 5, 6, 7, 8, 9, or 10 nm, and may be in the range between the two values exemplified herein. The crystallite diameter can be obtained in accordance with Sheller formula using half-width in the XRD pattern peak.

The ratio of the metal fine particles 130 to a total of the support powder and the metal fine particles 130 is preferably 20 to 70 mass%, and more preferably 30 to 60 mass%. The higher the ratio is, the more easily the continuum of the metal fine particles is formed by partially fusion-bonding adjacent metal fine particles to each other. On the other hand, when the ratio is too high, there is a case in which the voids in the support fine particles 150 are blocked by the metal fine particles 130, deteriorating mass diffusibility. The ratio is, particularly for example, 20, 25, 30, 35, 40, 45, 50, 55, 60, 65, or 70 mass%, and may be in the range between the two values exemplified herein.

In this way, when the ratio of the metal fine particles 130 is high, the adjacent metal fine particles 130 on the support fine particles 150 are fusion-bonded to each other to form a wire-shaped continuum, and this continuum becomes a conductive pathway, thereby increasing the electric conductivity of the supported metal catalyst 100. Cerium oxide is not usually selected as a material structuring the metal fine particles 150 due to its extremely low electric conductivity. In the present invention, however, by increasing the supported amount of the metal fine particles 130, the electric conductivity of the supported metal catalyst 100 is increased to a value of $10^{-4}$ S/cm or higher, which is a value acceptable as a catalyst.

The electric conductivity is, for example, $10^{-4}$ to $10^2$ S/cm, specifically for example, $10^{-4}$, $10^{-3}$, $10^{-2}$, $10^{-1}$, 1, 2, 3, 4, 5, 6, 7, 8, 9, 10, 20, 50, or 100 S/cm, and may be in the range between the two values exemplified herein, or may be equal to or higher than any one of the values exemplified herein.

Defining a peak intensity of (111) plane in the XRD pattern as I1 and a peak intensity of (200) plane as I2, I1/I2≥1.9 is preferred, I1/I2≥2.2 is more preferred, and I1/I2≥2.5 is even more preferred. Since the (111) plane of platinum is more catalytically active than the (200) plane, the larger the value of I1/I2, the higher the catalytic activity of the metal fine particles 130 containing platinum. Furthermore, the larger the supported amount of the metal fine particles 130 is, the greater the value of I1/I2 is. Therefore, the value of I1/I2 can be increased by increasing the supported amount of metal fine particles 130. The value of I1/I2 is, for example, 1.9 to 7.0, specifically for example, 1.9, 2.0, 2.1, 2.2, 2.3, 2.4, 2.5, 2.6, 2.7, 2.8, 2.9, 3.0, 3.5, 4.0, 4.5, 5.0, 5.5, 6.0, 6.5, or 7.0, and may be in the range between the two values exemplified herein. In the present specification, a peak intensity ratio means an intensity ratio at a peak top.

2. Use of Supported Metal Catalyst 100

The supported metal catalyst 100 is preferably used as an electrocatalyst for an electrochemical cell. The electrochemical cell means a cell that generates an electrochemical reaction. Examples of the electrochemical cell include a fuel cell that generates electricity using a fuel such as hydrogen and methanol by the electrochemical reaction, a hydrogen purifying and pressure boosting device that produces a high-pressure high-purity purified hydrogen gas from a hydrogen-containing gas by the electrochemical reaction, a redox flow battery that charges and discharges by a redox reaction, and a water electrolysis cell that decompose water into hydrogen and oxygen by the electrochemical reaction.

In terms of suppressing the generation of hydrogen peroxide during power generation of a fuel cell, the supported metal catalyst 100 is particularly preferred to be used as an electrocatalyst of a polymer electrolyte fuel cell with an electrolyte membrane between an anode and a cathode. In this case, the generation of hydrogen peroxide is suppressed, thereby suppressing the degradation of the electrolyte membrane. It is thought that adding a cerium compound to the electrolyte membrane can also suppress the generation of hydrogen peroxide, but in this case, the cerium compound moves. On the other hand, in the present embodiment, since the metal oxide structuring the support fine particles contains cerium, the movement of cerium is suppressed.

Furthermore, since cerium oxide is not easily dissolved even under an acidic condition, the supported metal catalyst 100 may be used in either an anode or a cathode of a fuel cell.

Furthermore, since the metal oxide structuring the support fine particles contains cerium, the heat resistance of the supported metal catalyst 100 is high. For this reason, the fuel cell constituted with the supported metal catalyst 100 can be operated at a temperature of 120°C or higher.

3. Method for Manufacturing Support Powder

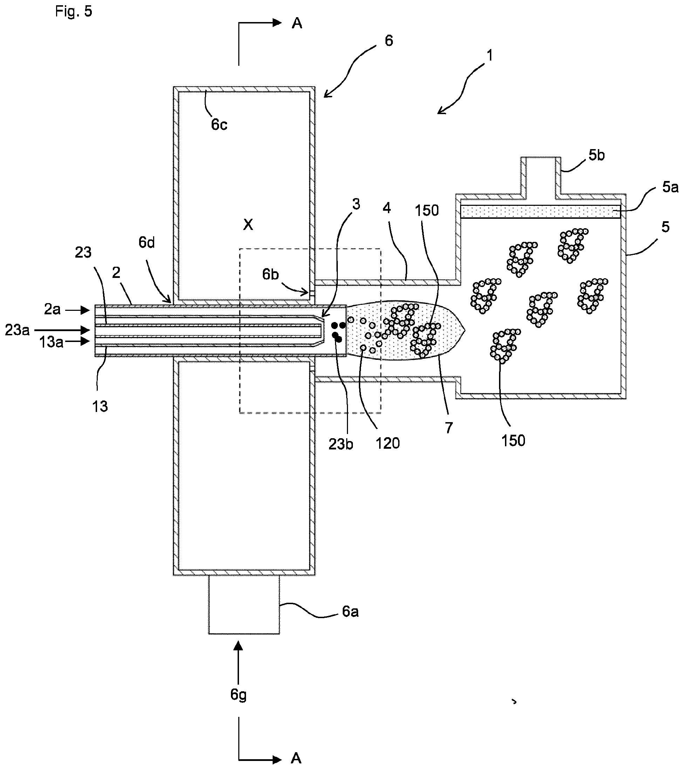

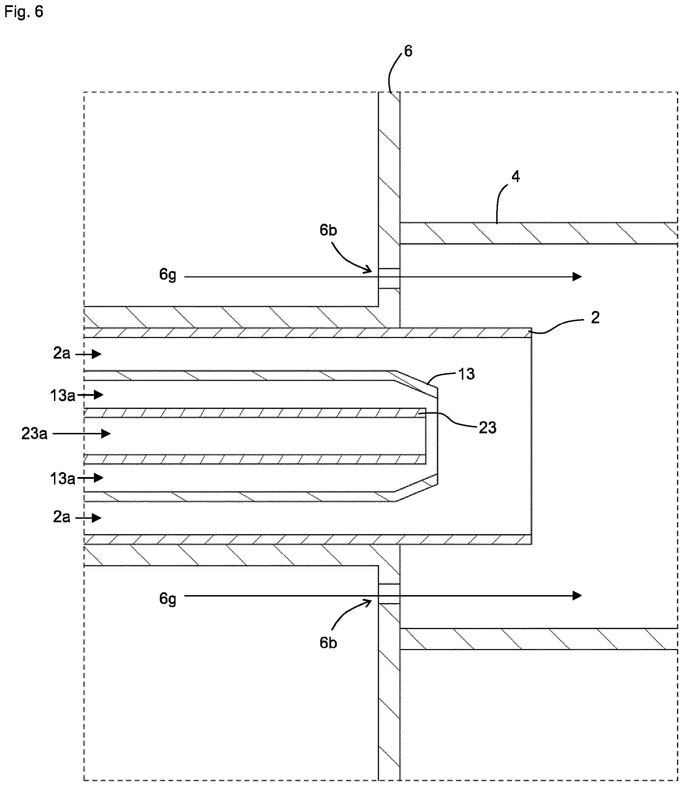

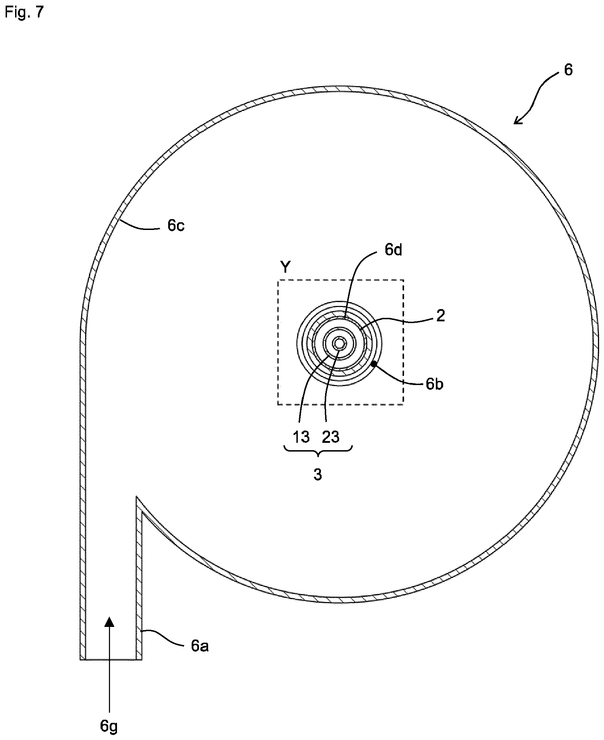

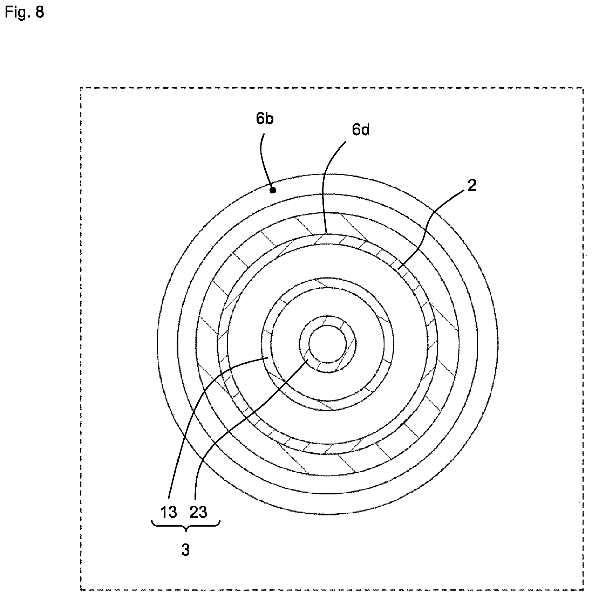

First, referring to Fig. 5 to Fig. 8, the manufacturing apparatus 1 which can be used for manufacturing the support powder is explained. The manufacturing apparatus 1 comprises a burner 2, a raw material supplying unit 3, a reaction cylinder 4, a collector 5, and a gas reservoir 6. The raw material supplying unit 3 comprises an outer cylinder 13, and a raw material distribution cylinder 23.

The burner 2 is a cylinder, and the raw material supplying unit 3 is arranged in the burner 2. Burner gas 2a is distributed between the burner 2 and the outer cylinder 13. The burner gas 2a is used to form a flame 7 at the tip of the burner 2 by ignition. A high temperature region having a temperature of 1000°C or higher is formed by the flame 7. The burner gas 2a preferably contains a combustible gas such as propane, methane, acetylene, hydrogen, or nitrous oxide. In one example, a gas mixture of oxygen and propane can be used as the burner gas 2a. The temperature of the high temperature region is 1000 to 2000°C for example, particularly for example, 1000, 1100, 1200, 1300, 1400, 1500, 1600, 1700, 1800, 1900, or 2000°C, and may be in the range between the two values exemplified herein.

A raw material solution 23a for generating the support powder is distributed in the raw material distribution cylinder 23. As the raw material solution 23a, the one containing a metal compound is used. As the metal compound, fatty acid metals (Ce, Gd, etc.) can be mentioned for example. The number of carbon atoms in the fatty acid is, for example, 2 to 20, preferably 4 to 15, and more preferably 6 to 12. As the fatty acid metal salt, metal octylates (cerium octylate, gadolinium octylate, etc.) are preferred. In the raw material solution 23a, the metal compound is preferably dissolved or dispersed in a non-aqueous solvent.

A mist gas 13a used for converting the raw material solution 23a into a mist is distributed in between the outer cylinder 13 and the raw material distribution cylinder 23. When the mist gas 13a and the raw material solution 23a are jetted together from the tip of the raw material supplying unit 3, the raw material solution 23a is converted into a mist. The mist 23b of the raw material solution 23a is sprayed into the flame 7, and the metal compound in the raw material solution 23a undergoes a thermal decomposition reaction in the flame 7. Accordingly, support powder which is an aggregate of support fine particles 150 having a chained portion structured by fusion-bonding the crystallite 120 into a chain is generated. The mist gas 13a is oxygen in one example.

The reaction cylinder 4 is provided between the collector 5 and the gas reservoir 6. The flame 7 is formed in the reaction cylinder 4. The collector 5 is provided with a filter 5a and a gas discharging portion 5b. A negative pressure is applied to the gas discharging portion 5b. Accordingly, a flow which flows towards the gas discharging portion 5b is generated in the collector 5 and the reaction cylinder 4.

The gas reservoir 6 has a cylinder shape, and comprises a cold gas introducing portion 6a and a slit 6b. A cold gas 6g is introduced from the cold gas introducing portion 6a into the gas reservoir 6. The cold gas introducing portion 6a is directed in a direction along the tangential line of the inner peripheral wall 6c of the gas reservoir 6. Therefore, the cold gas 6g introduced through the cold gas introducing portion 6a into the gas reservoir 6 revolves along the inner peripheral wall 6c. At the center of the gas reservoir 6, a burner insertion hole 6d is provided. The burner 2 is inserted through the burner insertion hole 6d. The slit 6b is provided in the vicinity of the burner insertion hole 6d to surround the burner insertion hole 6d. Accordingly, when the burner 2 is inserted through the burner insertion hole 6d, the slit 6b is provided to surround the burner 2. The cold gas 6g in the gas reservoir 6 is driven by the negative pressure applied to the gas discharging portion 5b, and is discharged from the slit 6b towards the reaction cylinder 4. The cold gas 6g can be any gas so long as it can cool the oxide generated, and is preferably an inert gas, for example, air. The flow speed of the cold gas 6g is preferably two times or more of the flow speed of the burner gas 2a. The upper limit of the flow speed of the cold gas 6g is not particularly limited, and is 1000 times the flow speed of the burner gas 2a for example. The ratio of flow speed of cold gas 6g/flow speed of burner gas 2a is 2 to 1000 for example, and the ratio is particularly for example, 2, 5, 10, 15, 20, 25, 30, 35, 40, 45, 50, 100, 200, 500, or 1000, and may be in the range between the two values exemplified herein. Here, in the present embodiment, a negative pressure is applied to the gas discharging portion 5b to allow the cold gas 6g to flow. However, a positive pressure can be applied to the gas introducing portion 6a to allow the cold gas 6g to flow.

In the present embodiment, since the cold gas 6g is supplied to the surroundings of the flame 7 through the slit 6b, the cold gas 6g flows around the flame 7 in a laminar flow. For this reason, the mist 23b, the crystallites 120, and the support fine particles 150 are not disturbed by the cold gas 6g and are fully heated by the flame 7 while moving along the flame 7, by which the reaction proceeds. Furthermore, since the support fine particles 150 are cooled by the cold gas 6g immediately after the support fine particles 150 get out of the flame 7, the structure having the chained portion is maintained. The cooled support fine particles 150 are captured and collected by the filter 5a.

In the present embodiment, the support powder which is an aggregate of the support fine particles 150 can be manufactured by using the manufacturing apparatus 1. Here, a high-temperature region of 1000°C or higher is formed at the tip of the burner 2 by the flame 7, and the metal compound is allowed to undergo a thermal decomposition reaction in this high-temperature region while supplying the cold gas 6g through the slit 6b to the surroundings of the high-temperature region. The high-temperature region can be formed by plasma instead of the flame 7.

4. Method for Manufacturing Supported Metal Catalyst 100

The method for manufacturing the supported metal catalyst 100 comprises a support powder generating step, a supporting step, a heat treatment step, and a reduction step.

<Support Powder Generating Step>

In the support powder generating step, the support powder is generated by the above-mentioned method.

<Supporting Step>

In the supporting step, the metal fine particles 130 are supported on the support powder. Such supporting can be performed by a reverse micelle method, a colloidal method, an impregnation method and the like. The colloidal method is preferred because it prevents the metal fine particles 130 from overlapping each other even when the supported amount of the metal fine particles 130 is large.

In the colloidal method, the metal colloidal particles are adsorbed onto the support powder. More particularly, the metal colloidal particles fabricated by the colloidal method is dispersed in an aqueous solution to prepare a dispersion, and then the metal colloidal particles are added and mixed in the dispersion. Accordingly, the colloidal particles are adsorbed onto the surface of the support powder. The support powder having the colloidal particles adsorbed thereon is then filtered and dried, thereby being separated from the dispersion medium. In one example, the metal colloidal particles can be fabricated by adding a reducing agent to a solution containing a metal-containing colloidal precursor and by reducing the precursor, but the metal-containing colloidal precursor may be used as it is as the metal colloidal particles.

<Heat Treatment Step>

In the heat treatment step, heat treatment is performed after the adsorbing step to convert the metal colloidal particles into the metal fine particles 130. The temperature of the heat treatment is, for example, 150 to 750°C, particularly for example, 500, 550, 600, 650, 700, or 750°C, and may be in the range between the two values exemplified herein. During this heat treatment step, crystallites grow. If the heat treatment temperature is too low, the crystallites 120 of the support fine particles 150 do not grow sufficiently and are easily eluted. On the other hand, the higher the heat treatment temperature, the smaller the secondary pore volume. For this reason, if the heat treatment temperature is too high, the secondary pore volume becomes too small and a flooding phenomenon easily occurs.

The heat treatment duration time is, for example, 0.1 to 20 hours, preferably 0.5 to 5 hours. The heat treatment duration time is, particularly for example, 0.1, 0.5, 1, 2, 3, 4, 5, 6, 7, 8, 9, 10, 15, or 20 hours, and may be in the range between the two values exemplified herein.

The heat treatment can be carried out under an inert gas atmosphere such as nitrogen, or under an inert gas atmosphere containing 1 to 4 % of hydrogen.

<Reduction Step>

In the reduction step, a reduction treatment of the metal fine particles 130 is carried out after the heat treatment step. The reduction treatment can be carried out by performing a heat treatment under a reductive atmosphere containing a reductive gas such as hydrogen. The reduction step can be omitted when unnecessary.

The temperature of the heat treatment is, for example, 70 to 300°C, and preferably 100 to 200°C. This temperature is, particularly for example, 70, 80, 90, 100, 110, 120, 130, 140, 150, 160, 170, 180, 190, 200, 250, or 300°C, and may be in the range between the two values exemplified herein.

The heat treatment duration time is, for example, 0.01 to 20 hours, and preferably 0.1 to 5 hours. The heat treatment duration time is, particularly for example, 0.01, 0.05, 0.1, 0.5, 1, 2, 3, 4, 5, 6, 7, 8, 9, 10, 15, or 20 hours, and may be in the range between the two values exemplified herein.

When the reductive gas is hydrogen, the concentration thereof is, for example, 0.1 to 100 volume%, preferably 0.2 to 10 volume%, and more preferably 0.5 to 3 volume%. This concentration is, particularly for example, 0.1, 0.2, 0.5, 1, 1.5, 2, 2.5, 3, 10, or 100 volume%, and may be in the range between the two values exemplified herein.

The metal fine particles 130 after the heat treatment in the heat treatment step may be in an oxidized condition. In such a case, the metal fine particles 130 may not show catalyst activity. In this case, the catalyst activity can be increased by reducing the metal fine particles 130.

**Examples**

The supported metal catalyst was manufactured in accordance with the method described below, and various evaluations were performed.

1. Manufacture of Supported Metal Catalyst 100

<Example 1>

(Manufacture of Support Powder)

By using the manufacturing apparatus 1 shown in Figs. 5 to 8, support powder was manufactured. As the burner gas 2a, gas prepared by blending 5 L/min of oxygen and 1 L/min of propane gas was used. This gas was ignited to form a flame (chemical flame) 7 of 1600°C or higher at the tip of the burner 2. The raw material solution 23a was prepared by blending cerium octylate and gadolinium octylate by a molar ratio of 0.8:0.2, and then the blend was further combined with mineral spirit terpen and dissolved. Oxygen was used as the mist gas 13a. 9 L/min of the mist gas 13a and 3 g/min of the raw material solution 23a were blended and sprayed from the tip of the raw material supplying unit 3 which is a spray nozzle (atomizer) towards the center portion of the flame, thereby allowing combustion of the blend and generation of the support powder which is an aggregate of the support fine particles 150. During such, negative pressure was applied to the gas discharging portion 5b to suction air from slit 6b at a flow rate of 170 L/min, thereby collecting the generated support powder in the collector 5 (with filter 5a) . The raw material supplying unit 3 comprises a double tube structure (overall length of 322.3 mm). Oxygen is supplied from the outer cylinder 13, and the raw material solution 23a is supplied to the raw material distribution cylinder 23. At the tip of the raw material distribution cylinder 23, a fluid nozzle and an air nozzle are provided, and the raw material solution 23a was converted into the mist 23b at this position. The amount of the support powder collected was 10 g or more when the operation was carried out for 60 minutes.

(Support, Heat Treatment, and Reduction of Metal Fine Particles 130)

Subsequently, the metal fine particles 130 were supported onto the support powder, and the heat treatment and the reduction were performed.

<Supporting Step>

First, 1.875 mL of platinum chloride hexahydrate solution was dissolved in 120 ml of super pure water, and then 5.9 g of sodium sulfite was added and stirred.

The solution was diluted with 450 ml of water, and pH of the solution was adjusted to 5 with NaOH. Thereafter, 60 ml of hydrogen peroxide was added, and the pH was readjusted to 5 with NaOH.

To the dispersion, a dispersion prepared by dispersing 0.50 g of the support powder in 100 mL of super pure water was added, and the mixture was agitated for 3 hours at 90°C. The mixture was cooled to room temperature, and was then filtrated. The residue was washed with super pure water and alcohol, and was then dried overnight at 80°C to support the metal fine particles 130 onto the support powder.

<Heat Treatment Step>

In the heat treatment step, samples after the supporting step were heat-treated at 400°C for 2 hours under a nitrogen atmosphere.

<Reduction Step>

In the reduction step, the samples after the heat treatment step were heat-treated at 150°C for 2 hours under a 1% hydrogen atmosphere to reduce the metal fine particles 130.

The supported metal catalyst 100 in which the metal fine particles 130 were supported on the support powder was obtained by the above-mentioned steps.

<Examples 2 to 4>

The supported metal catalyst 100 was manufactured in the same manner as in Example 1, except for altering the amount of the support powder added in the supporting step such that the ratio of the metal fine particles was a value shown in Table 1.

[Table 1]

| Table 1 | Example | | | |
|---|---|---|---|---|
| | 1 | 2 | 3 | 4 |
| Ratio of Metal Fine Particles (mass%) | 39 | 20 | 30 | 50 |
| Electric Conductivity (S/cm) | 3.12 | 0.000210 | 0.000510 | 7.23 |
| (111) Peak Intensity I1 / (200) Peak Intensity I2 of Metal Fine Particles | 2.58 | 1.95 | 2.45 | 2.86 |
| Crystallite Diameter of Metal Fine Particles (nm) | 3.9 | 2.8 | 3.3 | 5.1 |

<Example 5>

The supported metal catalyst 100 was manufactured in the same manner as in Example 3, except for using only cerium octylate as the raw material solution 23a.

<Example 6>

The supported metal catalyst 100 was manufactured in the same manner as in Example 3, except for using cerium octylate and zirconium octylate as the raw material solution 23a in a molar ratio of 0.5:0.5.

<Comparative Example 1>

The commercially available Pt/C catalyst (made by Tanaka Kikinzoku Kogyo K.K., type: TEC10E50E, supported amount: 50 mass%) was used as a catalyst of Comparative Example 1.

<Comparative Example 2>

The commercially available Pt/C catalyst (made by Tanaka Kikinzoku Kogyo K.K., type: TEC10E30E, supported amount: 30 mass%) was used as a catalyst of Comparative Example 2.

2. Various Measurements and Evaluations

Various measurements and evaluations shown below were performed.

<Photographing of TEM Image>

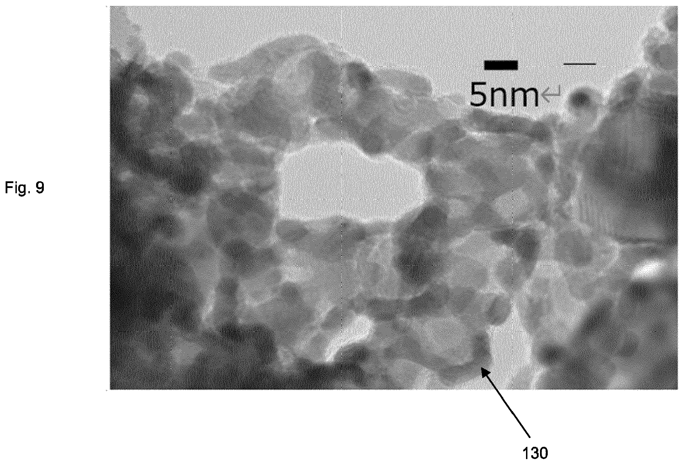

Fig. 9 shows a photographed TEM image of the supported metal catalyst 100 of Example 1. It is found that the adjacent metal fine particles 130 are partially fusion-bonded to each other to form a wire-shaped continuum extending along the surface of the support powder, as shown in Fig. 9.

<STM-EELS Measurement>

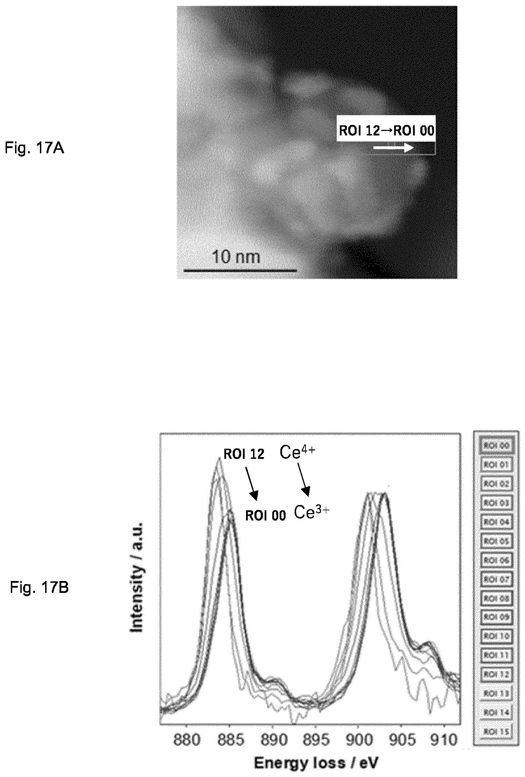

Figs. 17A and 17B show the result of performing STM-EELS measurement for the supported metal catalyst 100 of Example 1. Fig. 17A shows measurement regions (ROIs) 12 and 00. The ROI 00 is a region closer to the metal fine particles 130 than the ROI 12. As shown in Fig. 17B, there were changes in the peak position and the peak intensity around 885eV from the ROI 12 toward the ROI 00. This change indicates that the valence of Ce changes from tetravalent to trivalent, from the ROI 12 toward the ROI 00.

<STEM-EDX Measurement>

Figs. 18A to 18C show the result of performing STEM-EDX measurement for the supported metal catalyst 100 of Example 1. Fig. 18A shows the portion for which this measurement was performed. This measurement was performed in the region across the metal fine particles 130. Figs. 18B and 18C show the same measurement result. Fig. 18B highlights the measurement result of Pt and Ce, and Fig. 18C highlights the measurement result of Gd. This result indicates that Ce and Gd are diffused into the metal fine particles 130. It should be noted that the vertical axes in Figs. 18B and 18C do not reflect the intensity ratio among elements, and the existing amounts of Ce and Gd cannot be known from these graphs.

<Measurement of Electric Conductivity>

Each catalyst was filled in a uniaxial pressurizing device and a resistance thereof was measured when it was compressed at a pressure of 16 MPa. The measurement was performed for four levels of different amounts of the catalysts, and electric resistances of the catalysts were calculated based on a slope of a straight line obtained from a correlation between the electric resistance obtained and the thickness or weight of the sample. The electric resistances calculated were converted into electric conductivities. The results are shown in Table 1.

<Measurement of Peak Intensity and Crystallite Diameter of Metal Fine Particles>

XRD measurements were performed on the supported metal catalyst 100 to calculate the intensity ratio of the metal fine particles (= the peak intensity I1 of (111) plane / the peak intensity I2 of (200) plane) from the XRD pattern. In addition, the crystallite diameter of the metal fine particles was calculated in accordance with Sheller formula using half-width in the (200) peak. The calculated results are shown in Table 1. As shown in Table 1, it is found that the larger the ratio of the metal fine particles 130 is, the larger the peak intensity ratio is.

<Measurement of Mass Activity in Oxygen Reduction Reaction>

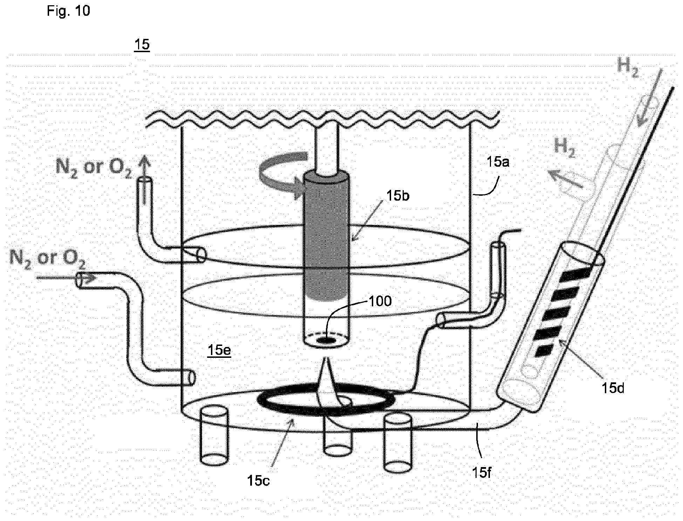

The oxygen reduction activity was measured by using an electrochemical measuring apparatus 15 shown in Fig. 10.

The apparatus 15 comprises a glass cell 15a, a working electrode 15b, a counter electrode 15c, and a reference electrode 15d. The potential of the working electrode 15b to the reference electrode 15d is adjustable by an unshown potentiostat. An electrolyte solution (0.1 M-HClO$_4$) 15e is stored in the glass cell 15a. Nitrogen or oxygen can be blown into the electrolyte solution 15e. The working electrode 15b is columnar and made of glassy carbon (GC), and a lower surface thereof is coated with the supported metal catalyst 100. The lower surface of the working electrode 15b, and the counter electrode 15c are immersed in the electrolyte solution 15e. The reference electrode 15d is communicated to the electrolyte solution 15e by a liquid junction formed by a salt bridge 15f.

The supported metal catalyst 100 dispersed in a mixture of 80 wt% water and 20 wt% ethanol was applied to the lower surface of the working electrode 15b and dried. Measurement was performed with oxygen blown into the electrolyte solution 15e. During the measurement, the working electrode 15b was rotated around a central axis thereof. Under such a condition, the potential of the working electrode 15b to the reference electrode 15d (Potential /V vs RHE) was set to 0.85 or 0.9 V, and the current value was measured.

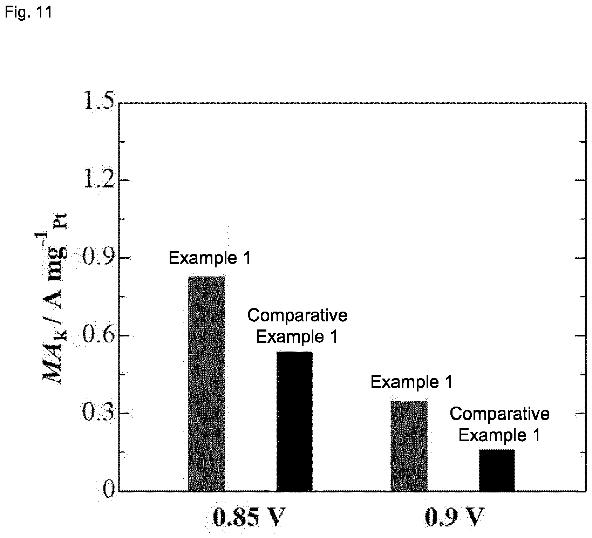

The results obtained are shown in Fig. 11. It is found that the catalyst of Example 1 shows higher mass activity in the oxygen reduction reaction than the catalyst of Comparative Example 1, as shown in Fig. 11.

<Measurement of Generation Amount of Hydrogen Peroxide>

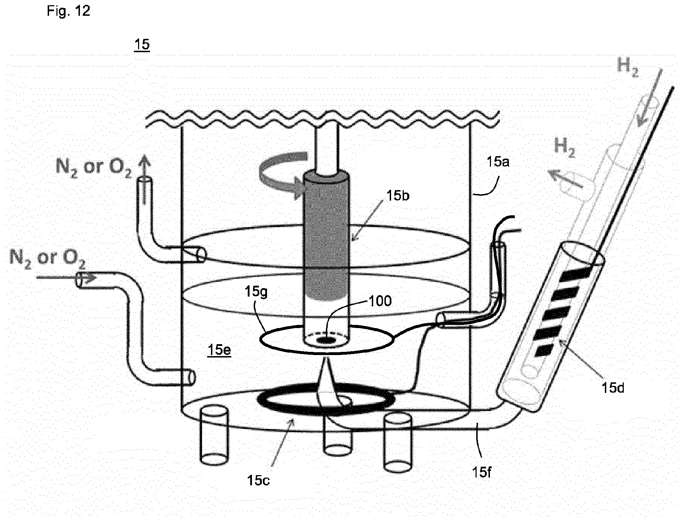

The generation amount of hydrogen peroxide was measured with the electrochemical measuring apparatus 15 shown in Fig. 12. The electrochemical measuring apparatus 15 in Fig. 12 is the same as that in Fig. 10, except that an annular electrode 15g surrounding the working electrode 15b is provided.

The generation amount of hydrogen peroxide was measured by the following method. First, the working electrode 15b was rotated around the central axis thereof with nitrogen blown into the electrolyte solution 15e. Under such a condition, the currents flowing to each of the working electrode 15b and the annular electrode 15g were measured when the potentials of the working electrode 15b and the annular electrode 15g to the reference electrode 15d (Potential /V vs RHE) were changed within the range of 0 to 0.10 V.

The currents flowing through the working electrode 15b and the annular electrode 15g are taken as $I_R$ and $I_p$, respectively, and $p(H_2O_2)$ was calculated based on the following formula. In the following formula, N represents the experimentally determined trapping rate of hydrogen peroxide.

$$[Math. 1]$$
$$p(H_2O_2) = 2I_R / (I_D \times N + I_R)$$

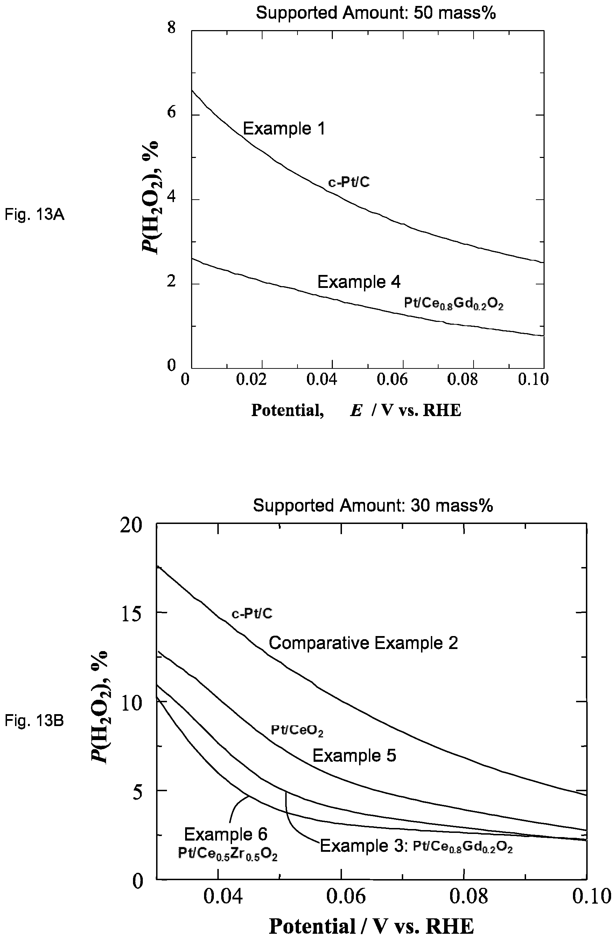

The results obtained from measurements on Example 4 and Comparative Example 1 are shown in Fig. 13A. It is found that the catalyst of Example 4 generates less hydrogen peroxide than the catalyst of Comparative Example 1, as shown in Fig. 13A.

Similarly, the results obtained from measurements on Example 3, Example 5, Example 6, and Comparative Example 2 are shown in Fig. 13B. It is found that the order of the generation amount of hydrogen peroxide was, in order from the smallest, Example 6, Example 3, Example 5, and Comparative Example 2, as shown in Fig. 13B.

<Measurement of Current-voltage Characteristic>

In a standard cell made by Japan Automobile Research Institute (JARI), a single cell was constituted by using the supported metal catalyst 100 of Example 1 as an anode catalyst and the same Pt/C catalyst as in Comparative Example 1 as an electrode catalyst for a cathode. The amount of the electrode catalyst used was 0.10 mg/cm². The current-voltage characteristics were measured when the single cell was operated with a temperature of 120°C, a cathode humidity of 95 %RH, an oxygen gas pressure at the cathode of 200 kPaG, and a hydrogen gas pressure at the anode of 200 kPaG.

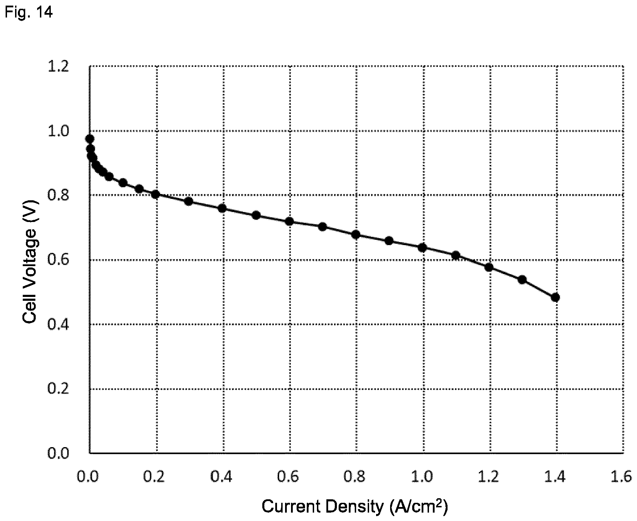

The results obtained are shown in Fig. 14. It is generally thought that an on-vehicle fuel cell is desirable to have an output of 1.0 A/cm² at 0.6 V. As shown in Fig. 14, the fuel cell constituted with the catalyst of Example 1 was found to have an output exceeding 1.0 A/cm² at 0.6 V.

<Hydrogen Peroxide Resistance Test>

To further test hydrogen peroxide resistance, retention tests were conducted in the open-circuit voltage state with the largest generation amount of hydrogen peroxide. In Example 2, the open-circuit voltage was measured when the standard cell was operated under the same condition as in "Measurement of Current-voltage Characteristic", except that the humidity at both electrodes was set to 80% RH.

In Comparative Example 2, the test was conducted under the same condition as in Example 1, except that the electrocatalyst for the anode was the same Pt/C catalyst as in Comparative Example 1. In Comparative Example 3, the test was conducted under the same condition as in Comparative Example 2, except that $Ce^{3+}$ ions were impregnated into the polymer membrane.

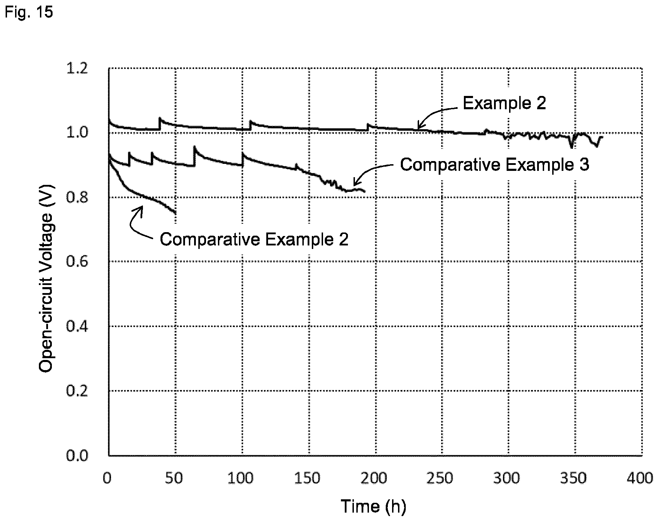

The results are shown in Fig. 15. Generally, in an on-vehicle fuel cell, hydrogen peroxide resistance function is imparted by impregnating $Ce^{3+}$ ions into the polymer membrane as in Comparative Example 3. In the fuel cell of Example 2, however, the potential remained stable for 350 hours or more, which is a longer period than Comparative Example 3, without impregnating $Ce^{3+}$ into the polymer membrane, and the improvement of hydrogen peroxide resistance was confirmed.

**Reference Sign List**

1: manufacturing apparatus, 2: burner, 2a: burner gas, 3: raw material supplying unit, 4: reaction cylinder, 5: collector, 5a: filter, 5b: gas discharging portion, 6: gas reservoir, 6a: cold gas introducing portion, 6b: slit, 6c: inner peripheral wall, 6d: burner insertion hole, 6g: cold gas, 7: flame, 13: outer cylinder, 13a: mist gas, 15: electrochemical measuring apparatus, 15a: glass cell, 15b: working electrode, 15c: counter electrode, 15d: reference electrode, 15e: electrolyte solution, 15f: salt bridge, 15g: annular electrode, 23: raw material distribution cylinder, 23a: raw material solution, 23b: mist, 100: supported metal catalyst, 110: void, 120: crystallite, 130: metal fine particles, 150: support fine particles, 160: branch

**Claims**

1. A supported metal catalyst, comprising:

   a support powder; and
   metal fine particles supported on the support powder, wherein:

   the support powder is an aggregate of support fine particles;
   the support fine particles have a chained portion structured by a plurality of crystallites being fusion-bonded to form a chain;
   the support fine particles are structured with a metal oxide;
   the metal oxide contains cerium; and
   an electric conductivity of the supported metal catalyst is $10^{-4}$ S/cm or higher.

2. The supported metal catalyst of Claim 1, wherein the electric conductivity of the supported metal catalyst is $10^3$ S/cm or lower.

3. The supported metal catalyst of Claim 1 or 2, wherein a ratio of the metal fine particles to a total of the support powder and the metal fine particles is 20 to 70 mass%.

4. The supported metal catalyst of any one of Claims 1 to 3, wherein an atomic ratio of cerium to whole metal contained in the metal oxide is 0.3 to 1.

5. The supported metal catalyst of any one of Claims 1 to 4, wherein a ratio of platinum contained in the metal fine particles is 80 atomic% or higher.

6. The supported metal catalyst of any one of Claims 1 to 5, wherein:

   the metal oxide contains cerium, and another element other than cerium; and
   the another element is a trivalent metal.

7. The supported metal catalyst of any one of Claims 1 to 6, wherein:

   the metal oxide contains cerium, and another element other than cerium; and
   R2/R1 is 0.99 or less, where R1 represents an ionic radius of a tetravalent cation of cerium, and R2 represents an ionic radius of a cation with the same valence as the number of valence electrons of the another element.

Fig. 1

Fig. 2

Fig. 3

Fig. 4

Fig. 5

Fig. 6

Fig. 7

6

6c

Y

6d

2

6b

13 23

3

6a

6g

Fig. 8

Fig. 9

5nm

130

Fig. 10

Fig. 11

Fig. 12

Fig. 13A

Supported Amount: 50 mass%

Fig. 13B

Supported Amount: 30 mass%

Fig. 14

Fig. 15

Fig. 16

$Ce^{3+}$

130

130

$Ce^{3+}$

M-CeO$_2$ (Ce$^{4+}$)

150

Fig. 17A

Fig. 17B

Fig. 18A

20 nm

Fig. 18B

Fig. 18C

## INTERNATIONAL SEARCH REPORT

| International application No. |
|---|
| **PCT/JP2021/047977** |

### A. CLASSIFICATION OF SUBJECT MATTER

***B01J 23/63***(2006.01)i; ***H01M 4/86***(2006.01)i; ***H01M 4/92***(2006.01)i; ***H01M 8/10***(2016.01)i; *C25B 11/04*(2021.01)n; *C25B 11/073*(2021.01)n
FI:    B01J23/63 M; H01M4/86 B; H01M4/86 M; H01M4/92; H01M8/10 101; C25B11/073; C25B11/04

According to International Patent Classification (IPC) or to both national classification and IPC

### B. FIELDS SEARCHED

Minimum documentation searched (classification system followed by classification symbols)

B01J21/00-38/74; H01M4/86-4/98; H01M8/10; C25B11/04; C25B11/073

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus / JST7580/ JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | CN 105810982 A (FUZHOU UNIVERSITY) 27 July 2016 (2016-07-27) | 1, 2, 4 |
|  | claims 1-3, paragraphs [0001], [0004], [0032]-[0038], fig. 1 |  |
| Y |  | 3, 5 |
| A |  | 6, 7 |
| Y | WO 2011/065471 A1 (YAMANASHI UNIVERSITY) 03 June 2011 (2011-06-03) | 3, 5 |
|  | claims 1-3, paragraph [0040], example 1, table 1 |  |
| A | JP 2010-272248 A (YAMANASHI UNIVERSITY) 02 December 2010 (2010-12-02) | 1-7 |
|  | claims 1-3, 8, paragraphs [0016]-[0018] |  |
| A | WO 2015/050046 A1 (MITSUI MINING & SMELTING CO., LTD.) 09 April 2015 (2015-04-09) | 1-7 |
|  | claims 1, 4, 5, table 1 |  |
| A | JP 4-121964 A (MITSUBISHI HEAVY INDUSTRIES, LTD.) 22 April 1992 (1992-04-22) | 1-7 |
|  | claims, examples, table 1 |  |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

## INTERNATIONAL SEARCH REPORT

International application No.

**PCT/JP2021/047977**

| | C. DOCUMENTS CONSIDERED TO BE RELEVANT | |
|---|---|---|
| Category* | Citation of document, with indication, where appropriate, of the relevant passages | Relevant to claim No. |
| A | KANG, Hee,Sang, et al. , The characteristics of nano-sized Gd-doped CeO2 particles prepared by spray pyrolysis, Journal of Alloys and Compounds, 2005, vol. 398, pp. 240-244, DOI:10.1016/j.jallcom.2005.02.009 , abstract, 1. Introduction, fig. 4, 6 | 1-7 |

Form PCT/ISA/210 (second sheet) (January 2015)

32

EP 4 272 864 A1

## INTERNATIONAL SEARCH REPORT
### Information on patent family members

International application No.

**PCT/JP2021/047977**

| Patent document cited in search report | | | Publication date (day/month/year) | Patent family member(s) | Publication date (day/month/year) |
|---|---|---|---|---|---|
| CN | 105810982 | A | 27 July 2016 | (Family: none) | |
| WO | 2011/065471 | A1 | 03 June 2011 | US 2012/0295184 A1 claims 9-11, paragraph [0073], example 1, table 1 EP 2506350 A1 CN 102640335 A KR 10-2012-0107081 A | |
| JP | 2010-272248 | A | 02 December 2010 | (Family: none) | |
| WO | 2015/050046 | A1 | 09 April 2015 | (Family: none) | |
| JP | 4-121964 | A | 22 April 1992 | (Family: none) | |

Form PCT/ISA/210 (patent family annex) (January 2015)

**REFERENCES CITED IN THE DESCRIPTION**

**Patent documents cited in the description**

- WO 2015050046 A